# EUROPÄISCHE PATENTSCHRIFT

(11) **EP 2 594 525 B1**
(45) Veröffentlichungstag und Bekanntmachung des Hinweises auf die Patenterteilung: **30.11.2016**
(21) Anmeldenummer: 12192754.5
(22) Anmeldetag: 15.11.2012
(51) Int. Cl.: G01N 21/552, B82Y 30/00, C12Q 1/68, G01N 21/55, G01N 33/543, G01N 27/327, G01N 27/02

(54) **Verfahren und Vorrichtung zum Nachweis eines Analyten in einer Probe mittels Oberflächen-Plasmonen-Resonanz (SPR) und Elektrochemischer Impedanz Spektroskopie (EIS)**
Method and device for detecting an analyte in a sample by means of surface-plasmon resonance (SPR) and electrochemical impedance spectroscopy (EIS)
Procédé et dispositif de contrôle d'un analyte dans un échantillon au moyen de la résonance des plasmons de surface (SPR) et de la spectroscopie d'impédance électrochimique (SIE)

(30) Priorität: 15.11.2011 DE 102011086393
(43) Veröffentlichungstag der Anmeldung: 22.05.2013
(73) Patentinhaber: Fraunhofer-Gesellschaft zur Förderung der angewandten Forschung e.V., 80686 München (DE)
(72) Erfinder: Boschke, Elke, 01159 Dresden (DE); Quenzel, Philipp, 01157 Dresden (DE); Bley, Thomas, 01737 Pohrsdorf (DE); Opitz, Jörg, 01219 Dresden (DE); Pohl, Andrea, 01109 Dresden (DE); Schreiber, Jürgen, 01189 Dresden (DE); Lapina, Viktoria Alexejewna, 220019 Minsk (BY); Lange, Ada, 01122 Dresden (DE); Rohayem, Jacques, 01309 Dresden (DE); Vonau, Winfried, 09326 Geringswalde (DE); Mertig, Michael, 01169 Dresden (DE); Päßler, Sandra, 09661 Rossau (DE)
(74) Vertreter: Kailuweit & Uhlemann Patentanwälte Partnerschaft mbB

(56) Entgegenhaltungen:
- EP-A1- 2 216 642
- DE-A1- 10 054 351
- US-A1- 2008 038 830
- BART M ET AL: "Development of a confined wall-jet flow-through cell for simultaneous electrochemical and surface plasmon resonance applications", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 84, Nr. 2-3, 15. Mai 2002 (2002-05-15) , Seiten 129-135, XP004360380, ISSN: 0925-4005, DOI: 10.1016/S0925-4005(02)00013-8
- TERRETTAZ S ET AL: "PROTEIN BINDING TO SUPPORTED LIPID MEMBRANES: INVESTIGATION OF THE CHOLERA TOXIN - GANGLIOSIDE INTERACTION BY SIMULTANEOUS IMPEDANCE SPECTROSCOPY AND SURFACE PLASMON RESONANCE", LANGMUIR, AMERICAN CHEMICAL SOCIETY, NEW YORK, NY; US, Bd. 9, Nr. 5, 1. Mai 1993 (1993-05-01), Seiten 1361-1369, XP000882499, ISSN: 0743-7463, DOI: 10.1021/LA00029A033

## Beschreibung

Die Erfindung betrifft eine Vorrichtung und ein Verfahren zum Nachweis eines Analyten, bspw. anorganischer bzw. organischer Moleküle, Viren, Virenbestandteile, Bakterienzellen und eukaryotischer Zellen, in einer Probe mittels der gemeinsamen Messung von Oberflächen-Plasmonen-Resonanz (SPR) sowie der frequenzabhängigen Elektrochemischen Impedanz Spektroskopie (EIS).

In der medizinischen Diagnostik, in der Pharma- und in der Lebensmittelindustrie werden Verfahren zum sicheren, reproduzierbaren und effizienten Nachweis von Kontaminationen benötigt.

Bei Krankheitsausbrüchen ermöglicht nur der spezifische und quantitative Nachweis von Erregern eine exakte Diagnose sowie einen zeitnahen Therapiebeginn. Die bisher zum Nachweis von Erregern eingesetzten Methoden sind jedoch zumeist sehr kosten- und zeitaufwendig und erfordern ein hohes Maß an Know-How sowie an apparativem Aufwand. Gerade durch die Notwendigkeit einer vielfältigen Laborausstattung sind die Möglichkeiten medizinischer Diagnostik vor Ort, beispielsweise in Krisengebieten, stark eingeschränkt. Dadurch kommt es zu Verzögerungen bei der Einstellung einer spezifischen Therapie, die gerade bei Infektionen mit akutem Krankheitsbild, bspw. Durchfallerkrankungen, zu vermeiden sind.

Für die Diagnose von Infektionen, insbesondere Virusinfektionen, kommen bislang üblicherweise drei Methoden zum Einsatz:
- der direkte Nachweis viraler Antigene durch ELISA
- der direkte Nachweis der viralen Nukleinsäure durch Real-Time-PCR
- der direkte Nachweis der Virionen durch Elektronenmikroskopie.

Beim ELISA (Enzyme-linked Immunosorbent Assay) handelt es sich um ein immunologisches Nachweisverfahren, wobei ein Analyt in einer, i.d.R. flüssigen, Probe mittels der Bindung eines Antigens an einen Antikörper nachgewiesen wird. Somit können nur solche Substanzen bzw. Antigene in einer Probe direkt nachgewiesen werden, für die bereits Antikörper verfügbar sind. Zwar lassen sich polyklonale Antikörper schnell gewinnen, jedoch weisen sie häufig stark variierende Bindungseigenschaften auf, was eine geringere Spezifizität der Nachweisreaktion zur Folge hat. Die Herstellung monoklonaler Antikörper hingegen, die eine höhere Bindungsspezifität an ein bestimmtes Antigen aufweisen, ist mit großem Aufwand und hohen Kosten verbunden. Dies ist insbesondere daher nachteilig, da der Gendrift vieler Viren zu einer Veränderung der auf der Virusoberfläche präsenten Antigene führt, was eine stabile und zuverlässige Identifizierung verschiedener Virenstämme zusätzlich erschwert. Mit der klassischen ELISA-Technik ist zudem der gleichzeitige Einsatz verschiedener Antikörper, und somit die gleichzeitige Diskriminierung verschiedener Virusstämme in einem Versuchsansatz, nicht möglich.

Mit der Real-Time-PCR ist dagegen ein Nachweis verschiedener Virusstämme möglich, die Durchführung ist, aufgrund des hohen apparativen Aufwands, jedoch an ein Labor gebunden. Die Interpretation der mit einer RT-PCR gewonnenen Daten, bspw. für eine Quantifizierung der Virus-Partikel, erfordert umfangreiche Fachkenntnisse. Weiterhin nachteilig ist das zur Quantifizierung der Ergebnisse notwendige Mitführen zahlreicher Referenzstandards.

Der direkte Nachweis der Virionen mit einem Elektronenmikroskop oder einem anderen bildgebenden Verfahren mit ausreichender Auflösung ist ebenfalls nur in einem entsprechend ausgerüsteten Labor möglich und somit stark örtlich gebunden. Darüber hinaus ist in der Regel eine aufwendige Probenpräparation und somit umfangreiches Fachwissen notwendig.

Auch in industriellen Anwendungsgebieten der chemischen oder Bioverfahrenstechnik ist die Notwendigkeit des spezifischen Nachweises einer Substanz immanent. Gerade die in der Bioverfahrenstechnik eingesetzten neuen immunologischen bzw. molekularbiologischen Verfahren sind jedoch in der Regel mit hohem apparativem Aufwand sowie hohen Kosten verbunden. Darüber hinaus ist die Anpassung solcher Verfahren auf verschiedene Analyten sehr aufwendig, was im Wesentlichen auf den fehlenden modularen Charakter der bekannten kommerziellen Lösungen zurück geführt werden kann. Die Durchführung von mikrobiologischen Kontrollen bei Wareneingangs-, Prozess- und Produktüberwachung in der Lebensmittel- und Pharmaindustrie sowie die prozessnahe Bestimmung biogener Targets in der Biotechnologie stellt daher gerade für kleine und mittelständige Betriebe ein großes Problem dar.

Als beste Alternative zu den meist bildgebenden und auf Fluoreszenzeffekten basierenden Nachweisverfahren zeigten sich non-invasive bzw. Label-freie Verfahren, wie bspw. die Elektrochemische Impedanz Spektroskopie (EIS) oder Oberflächen Plasmonen Resonanz Spektroskopie (SPR). Diese Verfahren ermöglichen den Nachweis von molekularen Bindungsinteraktionen unter Ausnutzung von sowohl physikalischen als auch biologischen Effekten. Dabei ist eine genetische oder anderweitige Manipulation der Proben in der Regel nicht notwendig, wodurch sie auch für den mobilen Einsatz vor Ort geeignet sind. Die Möglichkeit der zunehmenden Miniaturisierung der für diese Verfahren notwendigen elektronischen Bauteile hat zudem dazu geführt, dass eine Vielzahl non-invasiver Verfahren in mikrofluidische Systeme, sogenannte Lab-on-α-Chips, integrierbar ist. Dies ermöglicht unter anderem die rasche sowie größtenteils automatisierte Untersuchung auch größerer Probenmengen im Hochdurchsatzscreening.

Bei der Oberflächen Plasmonen Resonanz (SPR) handelt es sich um eine markierungsfrei arbeitende Detektionsmethode, die sich zur Untersuchung von Prozessen an Metall/Luft- bzw. Metall/Flüssigkeits-Grenzflächen eignet und aufgrund ihrer hohen Empfindlichkeit eine große Bedeutung in der Biosensorik erreicht hat. Der SPR-Effekt beruht auf der Totalreflexion parallel zur Einfallsebene polarisierten Lichtes an einer dünnen Metallschicht (bspw. Gold oder Silber, 30 - 300 nm Schichtdicke), die einem Prisma anliegt. Kollektive Schwingungsanregungen freier Elektronen, sogenannter Oberflächenplasmonen, in der Metallschicht werden im reflektierten Licht abhängig von der Wellenlänge detektiert. Dabei werden auch sehr kleine Änderungen des Brechungsindexes in der Nähe der Metalloberfläche erfasst. Anhand von Daten aus SPR-Untersuchungen lassen sich genaue Aussagen über die Kinetik von molekularen Interaktionen an der Grenzfläche und über die Affinität zwischen den jeweiligen Bindungspartnern treffen. Ein entscheidender Vorteil der Methode besteht darin, dass Bindungsexperimente in Echtzeit dargestellt und analysiert werden können (Meyer, H. BlOspektrum (2002) 8: 532-53699).

Die Impedimetrie, wie die Elektrochemische Impedanz Spektroskopie (EIS), ist neben der Amperometrie und der Potentiometrie eine vielfältig einsetzbare elektrochemische Messmethode. Sie erlaubt die Messung von zellulären Veränderungen in Realzeit. Aus der Messung der Impedanz lassen sich Rückschlüsse auf die Immobilisierung von Biomolekülen (Haddock, H. S.; Shankar, P. M.; Mutharasan, R.; Sensors ans Actuators B: Chemical 88 (2003) 67-74) sowie die Adhäsion von Zellkulturen (Laureyn, W., et al.; Sensors and Actuators B: Chemical 68 (2000) 360-370) auf den Sensoroberflächen ziehen.

Die Nutzung von Oberflächen Plasmonen Resonanz Spektroskopie sowie Elektrochemischer Impedanz Spektroskopie zum Nachweis von Analyten bzw. zur Untersuchung molekularbiologischer Systeme ist aus dem Stand der Technik bereits bekannt.

Die DE 10 2004 017 750 A1 beschreibt ein Analyse-Array mit heizbaren Elektroden und ein Verfahren für die chemische und biochemische Analytik, dessen einzelne Elektrodenoberflächen unabhängig voneinander auf unterschiedliche Temperaturen erhitzt werden können. Die Elektrodenoberflächen sind dabei mit Kontaktierungen versehen und in ihrer Eigenschaft als ohmsche Widerstände Bestandteile von Heizstromkreisen. Zusätzlich weisen die Elektroden weitere Kontakte zum Anschluss elektrochemischer Instrumente auf. Die Oberflächen der Elektroden sind als Reaktionsflächen ausgeführt und weisen eine Beschichtung mit Sondenmolekülen auf, die an bestimmte Targetmoleküle binden. Die Bindung der Targetmoleküle an die Elektrodenoberfläche über die Sondenmoleküle kann mit Hilfe des elektrochemischen Messkreises nachgewiesen werden. Weiterhin wird aufgabenhaft eine Elektrodenoberfläche beansprucht, auf der simultan unterschiedliche Analysemethoden durchgeführt werden sollen. Hinweise dazu, wie eine solche Elektrodenoberfläche aufgebaut sein könnte, finden sich in der Druckschrift jedoch nicht.

In der US 2008/0285040 A1 wird ein Verfahren zur elektronischen Detektion von Plasmonen Resonanz beschrieben. Aus der Messung von Änderungen spezifischer elektrischer Eigenschaften eines Materials werden dabei Rückschlüsse auf eine Änderung der Plasmonen Resonanz im selben Material gezogen. Resultiert die Änderung der Plasmonen Resonanz dabei aus der Bindung eines Analyten an das Material, kann diese Bindung somit nachgewiesen werden. Verschiebt sich bspw. die Frequenz einer Plasmonen Resonanz so, dass einstrahlendes Laserlicht stärker absorbiert wird, führt dies zu einer Erwärmung des Materials. Diese Erwärmung lässt sich dann durch Änderungen spezifischer elektrischer Eigenschaften, bspw. der Impedanz, nachweisen. Dieses Verfahren ist nur mit nanoskaligen Sensoren anwendbar, da nur dort die Erhöhung der Absorptionsrate zu einer messbaren Erwärmung führt. Ein Doppelnachweis der Bindung des Analyten ist bei diesem Verfahren ebenfalls nicht vorgesehen.

Mit der DE 100 54 351 A1 wird ein Verfahren zur gleichzeitigen Bestimmung von biomolekularen Wechselwirkungen mittels Messung der Oberflächen Plasmonen Resonanz und der Impedanz offenbart. Weiterhin wird eine Vorrichtung zum Nachweis eines an eine Festphase gebundenen Analyten offenbart. Die Festphase ist dabei mit Mitteln zur Messung der Oberflächen Plasmonen Resonanz sowie der Elektrodenimpedanz sowie zu deren unmittelbaren Auswertung versehen. Es wird dabei somit die Impedanz der Elektrode gemessen. Dies ist auch daraus ersichtlich, dass sich alle für die Impedanzmessung notwendigen Elektroden in einer Ebene befinden. Die gezielte Messung der Impedanz eines Probenvolumens ist mit der offenbarten Vorrichtung nicht möglich. Durch die gemeinsame Anordnung aller sensitiven Flächen auf einem einzigen Träger ist weder ein Wechsel einzelner Elektroden noch deren unabhängige Funktionalisierung möglich.

Es sind auch bereits Durchflusszellen bekannt, die eine kombinierte Messung von EIS und SPR, insbesondere zur Vermessung der Ausbildung dünner Schichten auf der Arbeitselektrode, ermöglichen sollen. Dabei sind mit der EIS dabei typischerweise Schichten mit Dicken von einigen Zehn Nanometern untersuchbar, wohingegen die SPR hingegen mit einer mehrere Hundert Nanometer in die Probe eindringenden evaneszenten Welle die Charakterisierung ausgedehnterer Bereiche erlaubt (vgl. M, Barts et al. Flow-through cell for simultaneous electrochemical and surface plasmon resonance application, Sensors and Actuators B 84, 129-135, 2001). Auch bei anderen bekannten Messanordnungen werden SPR- und EIS-Messungen simultan zur Bestimmung verschiedener Eigenschaften einer dünnen, direkt auf der Sensoroberfläche befindlichen Schicht verwendet (vgl. Terrettaz et al. Protein Binding to Supported Lipid Membranes, Langmuir, Vol.9, No. 5, 1993). Zur Nutzung frequenzabhängiger EIS-Messungen zur Bestimmung von Analyt-Konzentrationen in ausgedehnten Probenvolumen ist jedoch bislang wenig bekannt.

Bei Untersuchungen biologischer Proben oder allgemein Proben, die einen nachzuweisenden Analyten in geringen Konzentrationen enthalten, ist es häufig schwierig, ein ausreichend hohes Signal zu Rauschen Verhältnis (engl.: signal to noise ratio, SNR) zu realisieren. Gerade bei bildgebenden Verfahren sind daher eine digitale Nachbearbeitung sowie das Arbeiten mit speziellen Filtern üblich. Darüber hinaus gibt es Möglichkeiten, das Ausgangssignal zu verstärken, diese sind im Zusammenhang mit bildgebenden Verfahren jedoch häufig mit Nachteilen, bspw. Photobleichen, behaftet.

Auch bei non-invasiven Verfahren müssen häufig Signale detektiert werden, die in derselben Größenordnung liegen oder nur geringfügig höher sind als vorhandenes Hintergrundrauschen. Aus dem Stand der Technik sind daher auch für non-invasive Nachweisverfahren Methoden zur Signalverstärkung bekannt.

Die WO 2008/033167 A2 offenbart eine mit Nanopartikeln funktionalisierte Substratoberfläche, wobei auf den Nanopartikel ein oder mehrere molekulare Verbindungselemente immobilisiert sind. Damit soll eine effiziente Substratoberfläche für Biochips bereitgestellt werden, deren Effizienz aufgrund der Integration der Nanopartikel nicht durch die physikalischen und chemischen Eigenschaften des Substrats selbst limitiert wird. Weiterhin Gegenstand der Erfindung ist ein Verfahren wobei Wechselwirkung zwischen einem Analyten und den auf den Nanodiamanten immobilisierten Verbindungselementen mit Hilfe "label-freier" Detektionsverfahren nachgewiesen werden können. Eine konkrete Ausführungsform einer solchen Detektionsvorrichtung wird durch die Druckschrift jedoch nicht offenbart.

In der US 2008/0171346 A1 werden eine Vorrichtung und ein Verfahren zur Bindung eines in einer Probe enthaltenen, speziellen Analyten offenbart. Dazu besitzt die Vorrichtung ein Substrat mit einer exponierten Oberfläche, auf der rekombinante scFv-Fragmente von Antikörpern immobilisiert sind. Die Bindung des Analyten an die Sensoroberfläche wird bevorzugt mittels Quarz - Mikrowaagentechnik oder mittels Oberflächen Plasmonen Resonanz detektiert.

Die WO 2010/089147 A1 offenbart einen Sensor zur Messung der Oberflächen Plasmonen Resonanz mit erhöhter Sensitivität. Dazu sind nanoskalige dielektrische Partikel, ganz oder teilweise, in eine, die sensitive Fläche bildende, Goldschicht eingebettet. Bei der richtigen Einstellung von Radius, Dichte sowie Verteilung der Nanopartikel führt dies zu einer Intensitätserhöhung der Plasmonenmoden und somit zur Erhöhung der Sensitivität des Sensors. Eine Auswirkung der Nanodiamanten auf den Verlauf elektrischer Feldlinien außerhalb der Goldschicht wird in der Druckschrift nicht beschrieben, ebenso wenig wie die Verwendung einer solchen Sensorschicht zur Durchführung anderer Messmethoden als der SPR. Dazu notwendige Anschlüsse oder weitere Elektroden sind auf dem Sensor ohnehin nicht vorgesehen.

In der US 2010/0216226 A1 werden eine Vorrichtung, ein System und ein Verfahren zur Kontrolle einer Entzündungsreaktion in einer Person offenbart. Die Vorrichtung umfasst dabei einen Sensor zur qualitativen und/oder quantitativen Detektion von Entzündungsstoffen im Blut der Person. Als Detektionsmethoden werden allgemein Fluoreszenz oder Lumineszenz basierte Methoden, Förster Resonanzenergietransfer, Oberflächen Plasmonen Resonanz, Rasterkraftmikroskopie, Elektrochemische Impedanz Spektroskopie und andere Marker-freie optische Methoden, die Interferometer, Wellenleiter, Fasergitter, Ring-Resonatoren, photonische Kristalle oder Feldeffekttransistoren verwenden, aufgelistet.

In der EP 2 055 788 A1 wird ein Verfahren zur Detektion von Nukleinsäure - Sequenzen sowie ein Substrat zur Durchführung des Verfahrens beschrieben. Gemäß dem Verfahren werden auf diesem Substrat Oligonukleotidketten immobilisiert, die eine zu Teilen des zu detektierenden Targetmoleküls komplementäre Basenfolge aufweisen. Werden zwei solcher Oligonukleotide, eines mit seinem 5'- und das andere mit seinem 3'- Ende auf dem Substrat fixiert, bindet jeweils ein Moleküle an jeweils ein Ende des zu detektierenden Targetmoleküls. Somit werden die Targets ihrerseits mit beiden Enden an das Substrat gebunden, wodurch auf diesem vernetzte Strukturen entstehen.

In der WO2012/009239 A1 (veröffentlicht am 19.01.2012) wird ein Sensoraufbau beschrieben, dessen sensitives Element eine Beschichtung aus sogenannten "molecularly imprinted polymers" (MIP) aufweist, die aufgrund Ihrer räumlichen Struktur spezifisch an Liganden binden. Die Anwendung der Beschichtung für die Oberflächen Plasmonen Resonanz oder Elektrochemische Impedanz Spektroskopie (EIS) wird beschrieben.

Dem Stand der Technik ist kein Sensorsystem zum zeitnahen, mobilen, kostengünstigen sowie sicheren Nachweis einer Kontamination, bspw. hervorgerufen durch Viren, bekannt, mit dem ein gleichzeitiger und unabhängiger Nachweis des Analyten durch voneinander unabhängige Messverfahren zur sicheren Diagnostik möglich ist. Darüber hinaus sind wenige non-invasive Verfahren mit Signalverstärkung zur Verbesserung des Signal zu Rauschen Verhältnisses aus dem Stand der Technik bekannt

Die Aufgabe der Erfindung besteht darin, eine Vorrichtung sowie ein Verfahren zum Nachweis eines Analyten oder einer Kontamination, bspw. ausgelöst durch Viren, bereitzustellen. Dabei soll eine maximale Sensitivität des Nachweises sichergestellt werden, um auch geringe Mengen eines Analyten in einer Probe mit hoher Sicherheit identifizieren zu können. Die Vorrichtung und das Verfahren sollen zudem eine mobile, schnelle, einfach zu bedienende sowie kostengünstige Diagnostik bzw. Analyse von Proben ermöglichen.

Erfindungsgemäß wird die Aufgabe gelöst durch die Merkmale des Hauptanspruchs sowie den unabhängigen Ansprüchen 9 und 13, vorzugsweise Weiterbildungen der Erfindung sind Gegenstand der rückbezogenen Unteransprüche.

Die Aufgabe wird erfindungsgemäß gelöst durch eine Vorrichtung zum Nachweis eines Analyten in einer Probe mittels Oberflächen Plasmonen Resonanz (SPR) und Elektrochemischer Impedanz Spektroskopie (EIS) enthaltend
a. mindestens eine mit dielektrischen Nanopartikeln funktionalisierte und als Elektrode ausgebildete Sensoroberfläche für die EIS,
b. mindestens eine, gegenüberliegend und annähernd planparallel zur Sensoroberfläche angeordnete Gegen- sowie Referenzelektrode,
c1. wobei die Sensoroberfläche auf einem zumindest teilweise transparenten Substrat aufgebracht ist und auch als Sensoroberfläche für die SPR dient oder
c2. eine zusätzliche Sensoroberfläche für die SPR
   mit auf den Nanopartikeln immobilisierten, spezifisch an den Analyten bindenden Molekülen.

Die erfindungsgemäße Vorrichtung ermöglicht vorteilhaft den Nachweis eines Analyten bzw. der Bindung des Analyten an eine Sensoroberfläche mittels Messung der Oberflächen Plasmonen Resonanz- sowie der Elektrochemischen Impedanz. Die simultane Messung von EIS und SPR ermöglicht dabei vorteilhaft einen Doppelnachweis eines nachzuweisenden Analyten, wodurch die Nachweissicherheit deutlich erhöht wird, insbesondere, da die beiden Methoden voneinander unabhängige Ergebnisse liefern.

Die erfindungsgemäße Sensoroberfläche ist mit dielektrischen Nanopartikeln funktionalisiert, d.h. diese sind vollständig oder teilweise in die Sensoroberfläche eingebettet. Dabei steht die gesamte Oberfläche der dielektrischen Nanopartikel oder nur ein Teil davon mit dem Material der Sensoroberfläche in Kontakt. Bevorzugt ist die Sensoroberfläche dabei zwischen 5 % und 80 %, bevorzugt zwischen 30 % und 70 % und besonders bevorzugt zwischen 40 % und 60 %, von teilweise in die Sensoroberfläche eingebetteten Nanopartikeln bedeckt. Dadurch wird vorteilhaft eine höhere chemisch-mechanische Widerstandsfähigkeit der Sensoroberfläche erreicht. Die Nanopartikel haben bevorzugt einen Durchmesser zwischen 1 nm und 100 nm, besonders bevorzugt zwischen 5 nm und 50 nm. Bevorzugt handelt es sich bei den dielektrischen Nanopartikeln um Nanodiamanten.

Die Verteilung und die Dichte der dielektrischen Nanopartikeln in der Sensoroberfläche sind bevorzugt sowohl parallel als auch senkrecht zur Sensoroberfläche gleichmäßig angeordnet, wobei die dielektrischen Nanopartikel annähernd äquidistant zueinander in der Sensoroberfläche angeordnet sind. Die dielektrischen Nanopartikel sind dabei entweder ausschließlich an der Oberfläche der Sensorschicht oder in deren gesamten Volumen verteilt. Die Verteilung der dielektrischen Nanopartikel in der Sensorfläche ist geordnet oder ungeordnet, wobei die dielektrischen Nanopartikel bevorzugt geordnet vorliegen. Die dielektrischen Nanopartikel sind in der Sensoroberfläche so weit voneinander separiert, dass die Sensoroberfläche sowohl in ihrer Gesamtheit als auch lokal elektrisch leitfähig ist.

Die teilweise in die Sensoroberfläche eingebetteten dielektrischen Nanopartikel weisen erfindungsgemäß eine nicht metallbedeckte, kohlenstoffhaltige Oberfläche auf. An dieser Oberfläche sind erfindungsgemäß spezifisch an einen Analyten bindende Moleküle immobilisiert. Die Immobilisierung der Moleküle erfolgt dabei bevorzugt ausschließlich auf der Oberfläche der dielektrischen Nanopartikel mittels chemischer bzw. biochemischer Funktionalisierung der Oberflächen. Zur Funktionalisierung kommen bevorzugt Hydroxyl-, Carboxyl- und/oder Aminogruppen zum Einsatz. Weiterhin bevorzugt ist die Funktionalisierung der Oberflächen mit Hilfe von Aldehyd-, Carbonyl-, Ether-, Alkohol-, Epoxy-, Vinyl und/oder Phenylgruppen und/oder biomolekularen Liganden. Die Bindung der spezifisch an den Analyten bindenden Moleküle erfolgt dabei bevorzugt mittels kovalenter Bindung, durch elektrostatische Anziehungskräfte oder durch Antikörper-Antigen-Bindungen bzw. über Streptavidin-Biotin.

Die spezifisch an den Analyten bindenden Moleküle sind dabei erfindungsgemäß auf den dielektrischen Nanopartikeln und nicht auf den Metallbestandteilen der Sensoroberflächen immobilisiert.

Die Sensoroberfläche für die EIS ist darüber hinaus als Elektrode ausgebildet und weist mindestens eine Kontaktierung zum Anschluss elektrochemischer Instrumente auf, welche neben der Erfassung elektrischer Größen es auch ermöglicht, eine Gleichspannung oder eine Wechselspannung wählbarer Frequenz anzulegen.

Weiterhin befinden sich in der Messzelle zumindest eine Gegen- sowie zumindest eine Referenzelektrode, die gegenüberliegend und annähernd planparallel zur Sensoroberfläche angeordnet sind. Die Gegen- sowie die Referenzelektrode können dabei gemeinsam oder getrennt voneinander in der Messzelle angeordnet sein.

Die Messungen an einer Probe, bevorzugt einer Probenflüssigkeit, erfolgen dabei bevorzugt in einer Messzelle. Die Messzelle weist dazu einen ganz oder teilweise umschlossenen Hohlraum zur Aufnahme eines bestimmten Volumens einer Probe bzw. einer Probenflüssigkeit auf. Dieses Volumen wird teilweise von einer Sensoroberfläche oder mehreren Sensoroberflächen begrenzt, die somit eine oder mehrere Grenzflächen zwischen Substrat und Probe bilden.

Zumindest die Sensoroberfläche für die SPR ist erfindungsgemäß auf einem zumindest teilweise transparenten Substrat aufgebracht. Das Substratmaterial, bevorzugt Glas oder Kunststoff, ist zumindest in bestimmten Regionen lichtdurchlässig und weist dort einen Transparenzgrad von vorzugsweise mehr als 50 %, bevorzugt mehr als 75 % und besonders bevorzugt von mehr als 95 %, auf.

Jede Sensoroberfläche wird erfindungsgemäß durch eine auf dem Substrat aufgebrachte dünne Schicht gebildet. Dabei handelt es sich bevorzugt um eine dünne Metallschicht, besonders bevorzugt um eine dünne Schicht aus einem der Metalle Gold, Silber, Kupfer oder deren Legierungen. Die Dicke der Schicht beträgt dabei bevorzugt zwischen 10 nm und 300 nm, bevorzugt zwischen 20 nm und 200 nm und besonders bevorzugt zwischen 30 nm und 100 nm.

In einer bevorzugten Ausführungsform der Messzelle sind Referenz- und Gegenelektrode nicht mit dielektrischen Nanopartikeln funktionalisiert. Da die spezifisch an den Analyten bindenden Moleküle nur auf den dielektrischen Nanopartikeln, aber nicht auf den Metalloberflächen der Sensoroberfläche direkt immobilisiert sind, kann vorteilhaft eine individuelle Funktionalisierung der Sensoroberfläche mit spezifisch an den Analyten bindenden Molekülen direkt in der Messzelle erfolgen. Vorteilhaft kann die die Funktionalisierung mit klassischer Kohlenstoffchemie erfolgen. Dazu wird die Oberfläche der Nanodiamanten bevorzugt wie oben beschrieben funktionalisiert (z. B. partiell oxidiert um Hydroxyl- und/oder Carboxylgruppen einzuführen). Eine aufwändigere Sulfhydrylchemie ist nicht notwendig.

Weiterhin bevorzugt ist ein modularer Einbau von Sensoroberflächen, Gegen- und Referenzelektroden. Dies ermöglicht den Austausch einzelner Sensoroberflächen bzw. Elektroden und führt somit vorteilhaft zu günstigen Reparatur- bzw. Wartungskosten. Der Austausch der Sensoroberfläche mit den darauf immobilisierten spezifisch an den Analyten bindenden Molekülen durch eine Sensoroberfläche mit anderen darauf immobilisierten spezifisch an den Analyten bindenden Molekülen ermöglicht auch die Anpassung der Vorrichtung an neue Aufgabenstellungen.

Bevorzugt sind spezifisch an den Analyten bindende Moleküle ausgewählt aus Antikörpern, Peptid-Aptameren und/oder Nukleinsäure-Aptameren. Vorteilhaft eignet sich die Erfindung zum Nachweis von Analyten in vielen Gebieten, insbesondere für die Umweltanalytik, die wissenschaftliche Forschung und die Pharmazie. Der Analyt kann je nach Anwendung ein organisches oder auch anorganisches Molekül, ein Protein, eine Nukleinsäure, ein Kohlenhydrat oder Lipid, ein Mikroorganismus, eine Zelle oder eine Oberflächenstruktur einer Zelle oder eines Mikroorganismus sein. Der Begriff Mikroorganismus umfasst insbesondere Viren, Bakterien, Algen und Pilze.

Derartige spezifisch an den Analyten bindende Moleküle sind dem Fachmann bekannt. Er kann sie entsprechend dem gewünschten Anwendungsgebiet auswählen.

Bevorzugt binden die spezifisch an den Analyten bindende Moleküle spezifisch an Caliciviren, insbesondere Noroviren. Bevorzugt sind diese virusspezifischen Moleküle DNA-Aptamere, die eine Nukleinsäuresequenz ausgewählt aus den Sequenzen SEQ ID No. 1 bis 47 enthalten. Der Begriff Nukleinsäuresequenz umfasst dabei Sequenzen mit veränderten Rückgrat, insbesondere Phosphorthioat-Desoxyribonukleinsäuren, Peptidnukleinsäuren (PNA), Cyclohexen-Nukleinsäuren (CeNA), N3'-P5'-Phosphoramidate (NP), Verbrückte Nukleinsäuren (engl. locked nucleic acid, LNA), Tricyclo-Desoxyribonukleinsäuren (tcDNA) und Morpholino-Phosphoramidate (MF) sowie Sequenzen, in denen einzelne oder mehrere Basen durch andere Basen (wie z. B. Thymin -> Thyminderivate, wie Uracil, Adenin -> Adeninderivate, Guanin -> Guaninderivate, Cytosin -> Cytosinderivate) mit identischen oder vergleichbaren Hybridisierungseigenschaften ausgetauscht sind.

Durch die erfindungsgemäßen Calicivirus-, insbesondere Norovirus-spezifischen DNA-Aptamere, die eine Nukleinsäuresequenz ausgewählt aus den Sequenzen SEQ ID No. 1 bis 47 enthalten, wird vorteilhaft eine sehr hohe Nachweissicherheit von Caliciviren, insbesondere Noroviren erreicht, da dieses mittels SELEX Verfahren erzeugten DNA-Aptamere an die Kapsidproteine von Noroviren verschiedener Stämme binden, die zusammen für ca. 95 % der Norovireninfektionen weltweit verantwortlich sind.

Die Erfindung eignet sich auch zum Messen von Rezeptor-Ligand oder Protein-Protein-Interaktionen. Der Begriff spezifisch an den Analyten bindende Moleküle umfasst demnach auch Rezeptoren, die einen Ligand (Analyten) spezifisch binden, sowie Proteine, die ein anderes Protein oder ein Peptid (Analyten) spezifisch binden. Der Begriff Rezeptor umfasst dabei alle Strukturen, die ein Molekül (Analyten) spezifisch binden, insbesondere Rezeptorproteine (insbesondere Oberflächen- oder Membranrezeptoren aber auch intrazelluläre Rezeptoren, wie z. B. Kernrezeptoren).

Erfindungsgemäß ist mindestens eine Sensoroberfläche einer Gegenelektrode gegenüberliegend und annähernd planparallel angeordnet. Insbesondere sind Sensoroberfläche und Gegenelektrode bevorzugt nicht in einer Ebene angeordnet. Dies ermöglicht vorteilhaft Messungen der Elektrochemischen Impedanz in einem definierten Volumen der Probenflüssigkeit. Die annähernd planparallele Ausrichtung der Sensorfläche als Arbeitselektrode und der Gegenelektrode führt zu einem homogenen Feldlinienverlauf im Probenvolumen. Dieser Feldlinienverlauf ist ebenfalls gewährleistet, wenn Sensoroberfläche und Gegenelektrode einen Winkel zwischen 165° und 195°, bevorzugt zwischen 170° und 190° und besonders bevorzugt zwischen 175° und 185°, aufweisen. Besonders bevorzugt sind Sensoroberfläche und Gegenelektrode gegenüberliegend und annähernd flächengleich, also annähernd deckungsgleich, ausgebildet, so dass die Feldlinien annähernd senkrecht auf der Sensoroberfläche stehen.

Durch die Funktionalisierung der Elektrodenflächen mit dielektrischen Nanopartikeln können Messungen der Elektrochemischen Impedanz vorteilhaft mit höheren Spannungen als in üblichen EIS-Spektrometern durchgeführt werden, wodurch eine Signalverstärkung bzw. eine höhere Sensitivität im Messverfahren erreicht wird. Somit wird mit der EIS -Messung auch bei geringen Mengen des Analyts oder des Probenmaterials vorteilhaft ein deutlicher Nachweis des Analyten erbracht.

Besonders bevorzugt sind Sensoroberfläche und Gegenelektrode in der Messzelle so angeordnet, dass sie zwei gegenüberliegende Begrenzungsflächen des in der Messzelle eingeschlossenen Volumens komplett ausfüllen. Dies ermöglicht vorteilhaft eine Messung der Elektrochemischen Impedanz im gesamten Volumen der in der Messzelle befindlichen Probenflüssigkeit.

Die Referenzelektrode bzw. die Referenzelektroden sind dabei entweder auf der Seite der Sensoroberfläche oder auf der gegenüberliegenden Seite, gemeinsam mit der Gegenelektrode angeordnet.

In einer bevorzugten Ausführungsform der Erfindung ist mindestens eine Sensoroberfläche und Gegen- sowie Referenzelektrode in mindestens einer Messzelle in einem Analysearray bzw. einem Lab-on-α-Chip, angeordnet.

Die Messzellen enthalten dabei mindestens einen mikrofluidischen Zu- und Abfluss, mittels derer eine Probenflüssigkeit kontinuierlich oder diskontinuierlich in die Messzelle ein- und ausgeleitet wird, sowie Mittel zur Messung von EIS und/oder SPR Signalen, insbesondere mindestens eine erfindungsgemäße Sensoroberfläche. Innerhalb von Messzellen, die Mittel zur Messung der EIS beinhalten, befindet sich die Probenflüssigkeit dabei zwischen Sensoroberfläche und Gegenelektrode.

Das Analyse-Array beinhaltet mindestens eine, bevorzugt jedoch mehrere solcher Messzellen. Die Messzellen können dabei gleichartig oder verschiedenen Aufbaus sein. Weiterhin sind auf dem Analysearray Mittel zur Beaufschlagung der Messzellen mit Probenflüssigkeit über deren mikrofluidische Zu- und Abflüsse vorhanden, insbesondere mit den mikrofluidischen Zu- und Abflüssen verbundenen mikrofluidischen Kanälen. Bevorzugt sind auf dem Analysearray ebenfalls Mittel zum Verbinden der Messzellen mit elektrochemischen Instrumenten vorhanden.

In einer besonders bevorzugten Ausführungsform wird das Analysearray aus einer Flusszelle mit einer Vielzahl von Kanälen für den Durchfluss der Probenflüssigkeit gebildet. Das Grundmaterial der Messzelle, bevorzugt der Flusszelle mit den Kanälen, besteht aus organischen oder anorganischen Polymeren, bevorzugt Polycarbonat, Polystyrol (PS), Polypropylen oder COC (Cyclo Olefin Copoiymer) oder Polydimethylsiloxan (PDMS). Auf dieses Grundmaterial wird bevorzugt eine weitere Polymerschicht aufgebracht, besonders bevorzugt aus einem Olefin-Copolymer, auf der mindest eine erfindungsgemäße Sensoroberfläche aufgebracht ist. Diese weitere Polymerschicht wird bevorzugt räumlich in die Kanäle der Flusszelle angelegt bzw. im Vakuum angepresst.

In dem Analysearray sind eine oder mehrere gleichartige oder verschiedene Messzellen angeordnet. Jede der in dem Analyse-Array befindlichen Messzellen weist dabei mindestens einen mikrofluidischen Zu- und Abfluss auf, über die Flüssigkeiten kontinuierlich oder diskontinuierlich in die Messzellen geleitet werden. In einer ebenfalls bevorzugten Ausführungsform sind im Analyse-Array Vorrichtungen zur Kontrolle des Flusses der Probenflüssigkeit, bspw. Pumpen und Ventile, oder zur Sensorik, bspw. Strömungs- und Viskositätssensoren, enthalten. Diese mikrofluidischen Einrichtungen erlauben den Betrieb der im Analysearray befindlichen Messzellen als Durchflussmesszellen, wobei die Probenflüssigkeit kontinuierlich mit einer bestimmten Strömungsgeschwindigkeit durch einen Durchflusskanal durch die Messzelle hindurch geleitet wird. Der Durchflusskanal ist dabei zwischen der Sensoroberfläche und der gegenüberliegenden annähernd planparallelen Gegenelektrode angeordnet.

Ebenfalls bevorzugt ist ein diskontinuierlicher bzw. "stopped-flow" Betrieb der Messzellen, wobei eine bestimmte Menge einer Probenflüssigkeit in die Messzellen geführt wird, dort eine gewisse Zeit zum Zweck der Messung von EIS und/oder SPR verbleibt und anschließend aus der Messzelle geleitet wird.

In einer besonders bevorzugten Ausführungsform der erfindungsgemäßen Vorrichtung verfügt jede Messzelle über Mittel zur SPR - und EIS - Messung. Ebenfalls bevorzugt ist die gemeinsame Anordnung von Messzellen mit Mitteln zur SPR- oder EIS- Messung in einem Analyse-Array. Messzellen zur Durchführung von SPR - Messungen verfügen dabei zumindest über eine Sensorfläche, Messzellen zur Durchführung der EIS-Messung verfügen darüber hinaus über zumindest eine Gegen- sowie zumindest eine Referenzelektrode.

In einer bevorzugten Ausführungsform sind die Messzellen in dem Array derart angeordnet, dass eine Vielzahl gleichartiger Messzellen annähernd zeitgleich mit Probenflüssigkeit aus einem gemeinsamen Reservoir beaufschlagt werden. Somit wird eine Vielzahl vergleichbarer Messungen, mit vergleichbaren, besonders bevorzugt identischen, Ausgangskonzentrationen eines nachzuweisenden Analyten, simultan durchgeführt, wodurch vorteilhaft ein zuverlässigerer Nachweis eines Analyten ermöglicht wird. Neben dieser "Parallel"-Schaltung der Messzellen ist weiterhin die "Reihen"-Schaltung der Messzellen im Analyse-Array sowie Kombinationen von "Parallel" und "Reihen" - Anordnung der Messzellen in einem Analyse-Array bevorzugt. Bei der "Reihen"-Schaltung der Messzellen sind diese auf dem Analysearray derart angeordnet, dass eine Probenflüssigkeit nacheinander verschiedene Messzellen durchläuft wobei in jeder Messzelle ein Nachweis des Analyten mit Hilfe einer erfindungsgemäßen Sensoroberfläche erfolgt.

Weiterhin bevorzugt ist eine Ausführungsform der Erfindung, wobei sich das Substrat zwischen der Sensoroberfläche und einem zur Durchführung der SPR-Messung geeigneten SPR-Einheit befindet. Die SPR-Einheit befindet sich somit auf der der Sensoroberfläche gegenüberliegenden Seite des Substrats. Die SPR-Einheit weist bevorzugt einen modulierbaren Laser als Lichtquelle sowie eine Photodiode zur frequenzabhängigen Detektion der Oberflächen Plasmonen Resonanz auf.

Die Verwendbarkeit kommerziell erhältlicher SPR-Einheiten mit der erfindungsgemäßen Sensoroberfläche führt vorteilhaft zu einer modularen Verwendbarkeit der erfindungsgemäßen Vorrichtung. Die Sensoroberfläche befindet sich dabei auf einem Träger aus Polymermaterial, als besonders bevorzugtes Substratmaterial. Die Kombination der erfindungsgemäßen Sensoroberfläche mit kommerziellen SPR-Einheiten führt aufgrund des Einbringens von dielektrischen Nanopartikeln in die Sensoroberfläche vorteilhaft zu einer Signalverstärkung bzw. einer erhöhten Sensitivität in der SPR-Messung. Somit wird mit der SPR-Messung auch bei geringen Mengen des Analyten oder des Probenmaterials ein deutlicher Nachweis des Analyten erbracht. Die Ausbildung der erfindungsgemäßen Sensoroberfläche als Elektrode ermöglicht weiterhin vorteilhaft die einfache Integration von EIS-Messungen in bislang ausschließlich zur SPR-Messung verwendeten Systemen.

In einer ebenfalls bevorzugten Ausführungsform der Erfindung sind die Sensoroberflächen in Messbereiche unterteilt, die unabhängig voneinander auslesbar sind und auf denen Moleküle gleicher oder verschiedener Bindungsspezifizität immobilisiert sind.

Dabei sind an den einzelnen Messbereichen individuelle SPR- sowie EIS-Messungen unabhängig voneinander durchführbar. Die einzelnen Messbereiche befinden sich dabei auf einer gemeinsamen oder verschiedenen Sensoroberflächen in einer oder verschiedenen Messzellen.

Jeder Messbereich weist bevorzugt mindestens eine Kontaktierung zum Anschluss elektrochemischer Instrumente sowie eine Gegenelektrode auf. Weiterhin bevorzugt ist die Verwendung einer einzelnen Gegenelektrode zur sequentiellen EIS-Messung an den einzelnen Messbereichen. Weiterhin bevorzugt weist jeder Messbereich eigene Mittel zur Durchführung einer SPR-Messung auf. Dabei ist jedem Messbereich eine SPR-Einheit zugeordnet oder eine gemeinsame SPR-Einheit dient mittels geeigneter nano-optischer Elemente der sequentiellen SPR-Messung in allen Messbereichen.

Die Moleküle gleicher oder verschiedener Bindungsspezifizität sind dabei an verschieden bzw. getrennt voneinander funktionalisierten dielektrischen Nanopartikeln immobilisiert. Bei verschieden funktionalisierten dielektrischen Nanopartikeln, bspw. bei Messbereichen mit carboxylierten dielektrischen Nanopartikeln, insbesondere Nanodiamanten und Messbereichen mit aminierten dielektrischen Nanopartikeln, insbesondere Nanodiamanten, ist eine Immobilisierung von entsprechend präparierten Molekülen verschiedener Bindungsspezifizität vorteilhaft auch im Betrieb der erfindungsgemäßen Vorrichtung sowie wiederholt, bspw. nach der Regeneration einer Sensoroberfläche, möglich.

Bei Molekülen gleicher Bindungsspezifizität wird durch die Unterteilung der Sensoroberfläche in unabhängig auslesbare Messbereiche die Anzahl der unabhängig voneinander messbaren Signale erhöht, womit bauteilbedingte Fehler minimiert werden. Bei Molekülen gleicher Bindungsspezifizität befinden sich die einzelnen, unabhängig voneinander auslesbaren Messbereiche bevorzugt auf einer gemeinsamen Sensoroberfläche.

Besonders bevorzugt binden die Moleküle unterschiedlicher Bindungsspezifizität verschiedene Substanzen, so dass mit der erfindungsgemäßen Vorrichtung vorteilhaft verschiedene Analyten in einer Probe nachgewiesen werden können.

Weiterhin bevorzugt binden die Moleküle unterschiedlicher Bindungsspezifizität an die gleiche Substanz. Insbesondere bei Biomoleküle mit vielfältigen Bindungsstellen, bspw. verschiedenen eine gewisse Variabilität aufweisenden Kapsidproteinen bei Viren, wird durch die Verwendung von spezifisch an verschiedene dieser Bindungsstellen bindender Moleküle die Nachweiswahrscheinlichkeit eines Analyten deutlich erhöht.

Insbesondere bei Analyten, die evolutionären Veränderungen bzw. Gendrifts unterliegen, bspw. Viren, wird durch die Verwendung von solchen Molekülen, die spezifisch an hochvariable Bindungsstellen binden und solchen, die spezifisch an konservierte Bindungsstellen binden, zudem vorteilhaft die zeitnahe Detektion von Rekombinationen solcher Analyten ermöglicht. Bei Viren können weiterhin die Verteilung bzw. die Anteile verschiedener Virenstämme in einer Probe bestimmt und so die Einstellung einer geeigneten Therapie erleichtert werden.

Ebenfalls Gegenstand der Erfindung ist ein Verfahren zum Nachweis eines Analyten in einer Probe, wobei die Bindung des Analyten an in eine Sensoroberfläche eingebettete dielektrische Nanopartikel mittels spezifisch an den Analyten bindenden Molekülen erfolgt,
und durch Messung der Oberflächen Plasmonen Resonanz (SPR) sowie der Elektrochemischen Impedanz (EIS) nachgewiesen wird, wobei Daten zur Interaktion des Analyten mit der Sensoroberfläche mittels SPR- und EIS- und Daten zur Konzentration des Analyten in der Messzelle mittels EIS - Messung erfasst werden.

Im erfindungsgemäßen Verfahren erfolgt der Nachweis eines Analyten in einer Probe, vorzugsweise einer Probenflüssigkeit, mittels des Nachweises einer Bindung des Analyten an spezifisch an diesen Analyten bindender Moleküle. Diese Moleküle sind dabei auf dielektrischen Nanopartikeln immobilisiert, die ihrerseits in einer Sensoroberfläche eingebettet sind. Der Nachweis der Bindung zwischen dem Analyt und diesen Molekülen erfolgt mittels Messung der Oberflächen Plasmonen Resonanz, bzw. deren Änderung, bevorzugt an der Sensoroberfläche.

Im erfindungsgemäßen Verfahren erfolgt unabhängig von der Messung der SPR ein zusätzlicher Nachweis des Analyten mittels einer, bevorzugt frequenzabhängigen, Messung der Elektrochemischen Impedanz. Dabei dient die Sensoroberfläche, mit den darin eingebetteten dielektrischen Nanopartikeln sowie den auf diesen immobilisierten Molekülen, bevorzugt als Arbeitselektrode der EIS-Messung. Dadurch wird vorteilhaft ein Doppelnachweis erbracht, der eine zuverlässigere Bestimmung des Analyten ermöglicht.

Die auf den dielektrischen Nanopartikeln immobilisierten Moleküle binden dabei erfindungsgemäß spezifisch an einen nachzuweisenden Analyten. Die spezifisch an den Analyten bindenden Moleküle sind dabei nur auf den elektrischen Nanopartikel und nicht auf der dünnen Metallschicht der Sensoroberfläche immobilisiert. Um unspezifische Bindungen des nachzuweisenden Analyten an die Sensoroberfläche zu unterbinden, wird diese bevorzugt mit einer Beschichtung aus einem Blockierungsmittel versehen. Geeignete Blockierungsmittel sind dem Fachmann bekannt, z. B. aus ELISA-Techniken. Bevorzugt werden als Blockierungsmittel Serumalbumine, wie z. B. Rinderserumalbumin (BSA) oder Tenside, insbesondere nichtionische Tenside wie z. B. Polysorbate 20 ("Tween20") eingesetzt.

Die Bindung von nicht nachzuweisenden Substanzen an die Sensoroberfläche, sowie eine nicht an den dielektrischen Nanopartikeln erfolgende Bindung des Analyten wird somit vorteilhaft verhindert.

Die Verwendung einer mit dielektrischen Nanopartikeln funktionalisierten Sensoroberfläche im erfindungsgemäßen Verfahren führt vorteilhaft zu einer Signalerhöhung und somit zu einer gesteigerten Sensitivität im erfindungsgemäßen Verfahren. Die Funktionalisierung der Sensoroberfläche mit dielektrischen Nanopartikeln führt zu einer erhöhten Plasmonenstreuung an den dielektrischen Nanopartikeln und ermöglicht die Anregung stärkerer Plasmonenmoden an der Grenzschicht zwischen Sensoroberfläche und Probet, auch mit üblichen SPR-Systemen und Laserleistungen. Dies führt vorteilhaft zu einer Verstärkung des Signals der SPR-Messung.

Die Verwendung einer mit dielektrischen Nanopartikeln funktionalisierten Oberfläche als Arbeitselektrode einer EIS-Messung im erfindungsgemäßen Verfahren ermöglicht die Verwendung höherer Messspannungen und konzentriert die elektrischen Feldlinien auf den Oberflächen der dielektrischen Nanopartikeln, was vorteilhaft zu einer Signalverstärkung sowie zu einer erhöhten Sensitivität der EIS-Messung führt.

Die Bindung des Analyten an die an den dielektrischen Nanopartikeln immobilisierten Moleküle sowie deren Bindung an die dielektrischen Nanopartikel sind bevorzugt lösbar und die Sensoroberfläche somit regenerierbar. Das Ablösen der analytspezifischen Moleküle erfolgt bevorzugt mittels reversibler Denaturierung, mittels induzierter Spaltung von in den Molekülen enthaltenen spaltbaren Gruppen, mittels Besetzung derer Bindungsstellen mit hochkonzentriert zugeführten Salzen oder mittels geeigneter Einstellung des pH-Werts. Nach dem Ablösen der analytspezifischen Moleküle steht die Sensoroberfläche nach einer erneuten Funktionalisierung der dielektrischen Nanopartikeln erneut zum Nachweis des Analyten zur Verfügung.

In einer bevorzugten Ausführungsform des erfindungsgemäßen Verfahrens kommt ein Analysearray mit ein oder mehreren darin angeordneten Messzellen, jeweils enthaltend ein oder mehrere erfindungsgemäße Sensoroberflächen, zum Einsatz. Über weiterhin in dem Analysearray enthaltene und mit den Messzellen verbundene mikrofluidischen Zu- und Abflüsse werden die Sensoroberflächen mit einer zu untersuchenden Probenflüssigkeit kontaktiert. Die Einleitung der Probenflüssigkeit in die Messzellen kann dabei kontinuierlich oder diskontinuierlich erfolgen.

Die Durchführung der EIS- und der SPR-Messungen erfolgt dabei in einer oder verschiedenen Messzellen. Bevorzugt erfolgt in jeder Messzelle sowohl eine EIS- als auch eine SPR-Messung. Besonders bevorzugt erfolgen die EIS- und die SPR-Messung dabei mit derselben Sensoroberfläche, wobei diese als Arbeitselektrode der EIS-Messung fungiert. Dadurch werden mit beiden Messverfahren dieselben Bindungsereignisse detektiert, man erhält somit zwei direkt miteinander vergleichbare Datensätze.

In einer ebenfalls bevorzugten Ausführungsform sind die einzelnen Sensoroberflächen in unabhängig voneinander auslesbare Messbereiche unterteilt, in denen auf den dielektrischen Nanopartikeln Moleküle mit verschiedener Bindungsspezifizität immobilisiert sind. Dies ermöglicht den Nachweis verschiedener Analyte in der Probe oder bei nachzuweisenden Analyten mit variierenden Bindungsstellen einen Einzelnachweis der verschiedenen Bindungsstellen und somit die Detektion eines analytspezifischen Fingerabdrucks.

In einer ebenfalls bevorzugten Ausführungsform sind die einzelnen Sensoroberflächen in unabhängig voneinander auslesbare Messbereiche unterteilt, in denen auf den dielektrischen Nanopartikeln Moleküle mit gleicher Bindungsspezifizität immobilisiert sind. Dies ermöglicht vorteilhaft einen statistisch sichereren Nachweis eines Analyten.

Weiterhin bevorzugt ist die Nutzung solcher Analysearrays zur Aufreinigung eines Analyten in der Art einer Affinitätschromatographie. Dabei wird eine Probenflüssigkeit durch mindestens eine, bevorzugt mehrere, Messzellen geleitet und tritt dabei in Kontakt mit einer, bevorzugt mehreren, erfindungsgemäßen Sensoroberflächen. Durch die Anbindung des nachzuweisenden Analyten an die Sensoroberflächen wird dieser im erfindungsgemäßen Verfahren in der Probenflüssigkeit nachgewiesen. Wird die Bindung von Analyt und Sensoroberfläche anschließend durch Einstellen bestimmter Parameter, bspw. durch Spülen mit einer Lösung bestimmter Salzkonzentration, gelöst, kann so ein hochkonzentriertes Eluat des Analyten gewonnen werden. Somit steht der zuvor mittels der Sensoroberflächen charakterisierte Analyt für weitere Untersuchungen bzw. Arbeitsschritte zur Verfügung.

Im erfindungsgemäßen Verfahren erfolgen die EIS- und die SPR-Messung bevorzugt mit derselben Sensoroberfläche, wobei diese als Arbeitselektrode der EIS-Messung fungiert.

Erfindungsgemäß werden zusätzlich zu den, mittels EIS- und SPR-Messung gewonnen, Daten zur Interaktion des Analyten mit der Sensoroberfläche Daten zur Konzentration des Analyten in der Messzelle mittels EIS-Messung erfasst werden.

Aufgrund der geringen Eindringtiefe evaneszenter Wellen handelt es sich bei der SPR-Messung an der Sensor-Proben-Grenzfläche um eine sehr oberflächensensitive Methode. Im erfindungsgemäßen Verfahren werden mit der SPR-Messung geringe Veränderungen des Brechungsindex der Sensoroberfläche, aufgrund der Bindung eines Analyten an die auf den dielektrischen Nanopartikeln immobilisierten Moleküle, detektiert.

Die EIS-Messung ist im erfindungsgemäßen Verfahren als Oberflächen- sowie als volumensensitive Messung durchführbar. In Abhängigkeit von der Frequenz der an der Arbeitselektrode angelegten Spannung ist mit der EIS-Messung sowohl eine selektive Detektion der Sensor-Proben-Grenzschicht als auch eine Detektion des gesamten in der Messzelle, bzw. zwischen Arbeits- und Gegenelektrode, befindlichen Probenvolumens möglich. Die Kombination von EIS- und SPR-Messung ermöglich somit zusätzlich zum erfindungsgemäßen Doppelnachweis einer Bindungsinteraktion von Analyt und den an der Sensoroberfläche immobilisierten Molekülen eine Detektion von elektrochemischen Veränderungen in der gesamten Probe. Besonders bevorzugt ist eine Durchführung von EIS-Volumenmessungen in Messzellen mit einem begrenzten Volumen einer ruhenden, d. h. nicht-fließenden, Probenflüssigkeit. Insbesondere bei gestopptem Probendurchfluss ist so vorteilhaft die Bindung des Analyten an die Sensoroberfläche anhand einer Konzentrationsverminderung des in der Probe gelösten Analyten detektier- und nachweisbar. Dies führt zu einer vorteilhaften weiteren Erhöhung der Nachweissicherheit des Analyten im erfindungsgemäßen Verfahren.

In einer weiterhin bevorzugten Ausführungsform des erfindungsgemäßen Verfahrens, werden Peptid-Aptamere und/oder DNA-Aptamere und/oder Antikörper als spezifisch an den Analyten bindende Moleküle verwendet.

An der Bindung der Moleküle an den Analyten, die bevorzugt strukturabhängig erfolgt, können kovalente Bindungen, ionische Bindungen, Wasserstoffbrückenbindungen, Dipol-Dipol-Wechselwirkungen sowie hydrophobe/hydrophile Wechselwirkungen beteiligt sein. Besonders bevorzugt weisen die Moleküle eine komplexe dreidimensionale Struktur auf, die der Struktur der Targets komplementär entgegengesetzt ist. Dadurch binden diese Moleküle spezifisch an einen speziellen Analyten. Die Stärke dieser Bindung erlaubt, dass durch Einstellen von bestimmten Parametern, bspw. Strömungsgeschwindigkeit, Salzkonzentration oder pH-Wert der Probenlösung, die unspezifische Bindung von Analytbruchstücken und/oder anderen Verunreinigungen unterbunden werden kann, ohne die Bindung zwischen den spezifisch an einen Analyten bindenden Molekülen und dem Analyten zu beeinträchtigen.

Besonders bevorzugt handelt es sich bei den spezifisch an einen Analyten bindenden Molekülen um Aptamere, hier einzelsträngige DNA-Oligonukleotide. Besonders bevorzugt werden Aptamere mit einer besonders hohen Bindungsaffinität zum Analyten im SELEX (*selection of ligands by exponential enrichment*) Verfahren, durch "systematische Evolution von Liganden durch exponentielle Anreicherung" erzeugt. Durch die geringe Größe von Aptameren, bspw. im Vergleich zu Antikörpern, sind diese vorteilhaft besonders gut auf dielektrischen Nanopartikeln, insbesondere Nanodiamanten immobilisierbar.

Gegenstand der Erfindung ist auch die Verwendung des erfindungsgemäßen Verfahrens und/oder der erfindungsgemäßen Vorrichtung zum Nachweis von Noroviren.

Bevorzugt verwendet werden dazu im SELEX-Verfahren erzeugte Aptamere, die bevorzugt selektiv an Norovirus-Kapsidproteine binden. Besonders bevorzugt werden dabei rekombinante Norovirus-Kapsidproteine aus 20 Norovirus-Stämmen verwendet. Diese Stämme werden aus verschiedenen Genotypen ausgewählt, die mehr als 95 % der Norovirusinfektionen verursachen.

Diese Kapsid-Proteine werden rekombinant in *E. coli* und im Baculovirus-Expressions-System exprimiert, mit Hilfe verschiedener Verfahren aufgereinigt (Affinitäts-, lonenaustausch-, Gelchromatographie) und mittels PAGE, Western-Blot sowie Massenspektrometrie charakterisiert.

Die so gewonnenen Kapsid-Proteine werden anschließend als Targets eines SELEX-Verfahrens verwendet und so spezifisch an diese Proteine bindende Aptamere generiert. Damit können neuartige Liganden zur Verfügung gestellt werden, die die konventionell verwendeten, teuren und unstabilen Antikörper für das Funktionalisieren von Sensoroberflächen, insbesondere dielektrischen Nanopartikeln, ersetzen können.

Bevorzugt kommen in der erfindungsgemäßen Vorrichtung und/oder dem erfindungsgemäßen Verfahren Aptamere enthaltend eine Nukleinsäuresequenz ausgewählt aus den Sequenzen SEQ ID No. 1 bis 47 als spezifisch an den Analyten bindende Moleküle zum Einsatz.

Gegenstand der Erfindung sind auch Aptamere, die eine Nukleinsäuresequenz ausgewählt aus den Sequenzen SEQ ID No. 1 bis 47:

| | |
|---|---|
| SEQ ID 1 | GTCTG TAGTA GGGAG GATGG TCCGG GGCCC CGAGA CGACG TTATC AGGC |
| SEQ ID 2 | TATCT TGGGT CATCT TGCGC GCGGC TCGTT ACTTC ACAGC TGGAC TGAT |
| SEQ ID 3 | ACGTA GTCCC AGCAC GGTTT GCCAA AAAGC ATGGA GGTGG TCCGG GTCC |
| SEQ ID 4 | TCATA GCTCG AGCTC AAGGG GGTGT GGCAT GGAGG TGGTC CGGGT CC |
| SEQ ID 5 | AGTTA CTCTG TAAGC TTACT GAGCA TTCTA CTGTC GTACG AACTT GG |
| SEQ ID 6 | TCATG CCATT GCCAA TCCCG TAAAT TTCGT CCTGA TATCC CGCCT CA |
| SEQ ID 7 | GTCGG ACCAT ACAAA TGAAC AATGT GTTAG CAAAC AGTTC ATGCA CACA |
| SEQ ID 8 | GCAAT GCGGG ACTAG CTGTA CGATG GGTGA GGGAC TTGAG TAGTC TGTG |
| SEQ ID 9 | TGCAC CCGAT CGAGG ACCTA TGTTA CACTG AATGA ATTTA ACCAC TGT |
| SEQ ID 10 | AAATG TGTTC ATAGA CGGAT AGCCG TGCTG TAATA AACCG CAAGT TGGA |
| SEQ ID 11 | ATATT TCAGT ACTAA GGGTA TACGG TCGGA ATGCC AACGT AGAAA GCCC |
| SEQ ID 12 | TGTAA CACAT AATCA TACCG CGTCT TAAAT TTGGG CTATT GGCAA T |
| SEQ ID 13 | CATGG AGGTG GTCCG GGTCC CATGG TCAGC CACAA ACTAG TCATC AAGG |
| SEQ ID 14 | AGGTA TTGCG GCATC GTTAT CGCGG TCGGA TTCTA GTGCA AAGTT TGAG |
| SEQ ID 15 | CCCAT GTTCG TTTGT CTATC GTTAT CTCCA TCTCC GGTTC TATTA TCGT |
| SEQ ID 16 | CCGGA CAGGC CTCGG GTTAA CCTAC AACGC TACGT GGTCT CACTC CCAG |
| SEQ ID 17 | ACATC GTCTA TACTT GTCCA ACTTC GCTTT CTCTT CAGAG GCCGG TGTG |
| SEQ ID 18 | CTCGG CAAAG TTAAG TGTCG CCGGA ATTCT ATAAT AGCGT TGAGG TCGG |
| SEQ ID 19 | GTCTG TAGTA GGGAG GATGG TCCGG GGCCC CGAGA CGACG TTATC AGGC |
| SEQ ID 20 | TCATA GCTCG AGCTC AAGGG GGTGT GGCAT GGAGG TGGTC CGGGT CC |
| SEQ ID 21 | GCGTA GTCCT AGCAC GGTCT GCTAA AAAGC ATGGA GGTGG TCCGG GTCC |
| SEQ ID 22 | ACCTA TGTCT ATCGT AGTAC GCGTA TTCTA TATAG GCAAA CGCCC GTT |
| SEQ ID 23 | TGTCC GACGT GGGTG TTTAC ATGTT AATAT GATTT TCTTC GGCCC TTCG |
| SEQ ID 24 | TACTT GGTCA ATTTA GCGAC GACTC TGTCA TGTGA TTCGG GTTCT TGC |
| SEQ ID 25 | TGTAC CAACC GATTT AGATA ATTGT TCTTA TAATG TCCTA TCAGT CCAG |
| SEQ ID 26 | CGCCC TCGTC CTGAC CGTGA GCGAC CTACT CTGTG TTCCT GCTTT TGAT |
| SEQ ID 27 | GAGTT GGTAG TGAGC CACTA GCCGA CTTTG TGTTG TTGCG ACTCC TGAC |
| SEQ ID 28 | GTATG ACTAT GACCG TAGGA ATCCA ATTTT ATTGC |
| SEQ ID 29 | ATCGG GTACG CAACC CGCAT CTATA AAGTC AGCGC GGATT TGATA ACGG |
| SEQ ID 30 | CAATA GTAAC GTGGA CGGGT ACAAC ATTAC TAGAC TTGCA CTGGA TGTT |
| SEQ ID 31 | TCCAG GGATC AAAGC TAGAG TTACT TAGGG CCGGT CTGTC |
| SEQ ID 32 | TGGAG GTGAA ATGCA CTAGA GAAAC ACGCT ACGTC CACTG TCTAT ATAG |
| SEQ ID 33 | CCGGT GGGAT GAGCG TCCGG TCAGC GGTAG CTGAT CTAGT GTAGG TGCC |
| SEQ ID 34 | TGTCT TAAGG ACAGA GTCTG GTTAC GCTGA TATTG TAATC ATGCC CCTA |
| SEQ ID 35 | AGTCC CGTTG CTAGT GGCTT CATTA TGTTG ATTGT TTTGG GGTCC GAC |
| SEQ ID 36 | TAGTG CGATA GTTCA TGAAC AGGAT TACGT TCTGC CGTTG CTGTT TGC |
| SEQ ID 37 | TAAGT TGCCG TACTG GTGAA TATGA CTGTC AACAT GAACT AACGG CTTA |
| SEQ ID 38 | GCATA AGTTA TAGGT GCTAT GCCAT AAGTT AGTCT CGTAC TTTCA TGAC |
| SEQ ID 39 | GTCTA CCGAT AGGTC CGTAG GGCAA GAGAA GCATA CGTGA CCACT AGTA |
| SEQ ID 40 | TTGAG GCTTA ATTAC TGATA ATTAC ATTGG AGCCG TCAGT CTTGA CAAT |
| SEQ ID 41 | CCTCG GTTCG AGTCG GTCGG CTGGC TAGGC CCGTA TTTGT GTGCG TGTC |
| SEQ ID 42 | AATGG ACATG GGGTC TTCTT CAGCA CACGG CAAAT TGCGT GGTAC GGCC |
| SEQ ID 43 | ATTAC ACATG TGGTG TTTGC ACTTT TTGGA GAAGT TAAGG TTTCG TTTG |
| SEQ ID 44 | CTGCA TATTG CTATT AACCC GTTCT CCCGT GTGAT CATAC CTGTA GTCC |
| SEQ ID 45 | CATGG AGGTG GTCCG GGTCC CATGG TCAGC CACAA ACTAG TCACC AAGG |
| SEQ ID 46 | CGATT CCTAG GGTTG ATAAT GTTGG TTTGT CAGTA AGTTT CGACG ATGC |
| SEQ ID 47 | AGCTA TCAAG TCGAG GCGCA CGACA TGGGT GTATT TTCTG CTCAT ACGG |

enthalten, wobei der Begriff Nukleinsäuresequenz wie oben definiert ist. Die Aptamere haben bevorzugt eine Länge von 35 bis 100, bevorzugt 35 bis 70, bevorzugt bis 50 Basen.

Die durch die verwendeten Aptamere spezifisch als Analyt gebundenen Noroviren sind eine der häufigsten Ursachen viraler Gastroenteritiden weltweit. Sie befallen alle Altersgruppen und verursachen ungefähr ein Drittel der viralen Gastroenteritis-Ausbrüche in den USA und Europa. Noroviren zeichnen sich epidemiologisch durch eine hohe Infektiosität und Morbidität aus, die sich in Fehlzeiten der Patienten und allgemeinen patientenbezogenen Kosten niederschlagen. Durch die erfindungsgemäße Verwendung spezifisch an die Kapsid-Proteine von Noroviren bindender Aptamere in der erfindungsgemäßen Vorrichtung wird eine neue Nachweistechnik vorgeschlagen, durch deren Verwendung für die Detektion von Noroviren vorteilhaft ein Zeitgewinn und eine Kostenersparnis zu erwarten sind.

Weiterhin bevorzugt ist die Verwendung von Aptameren, die spezifisch an hochvariable oder an konservierte Bereiche der Kapsid-Proteine von Noroviren binden. Vorteilhaft kann so die Selektivität und Sensitivität der erfindungsgemäßen Vorrichtung verbessert werden. Ebenfalls bevorzugt ist die Kombination verschiedener Aptamere auf einem Biochip. Das ermöglicht vorteilhaft, neu auftretende Rekombinationen der Kapsid-Proteine zeitnah zu detektieren.

Die Erfindung umfasst auch die Verwendung von Aptameren, enthaltend eine Nukleinsäuresequenz, ausgewählt aus den Sequenzen SEQ ID No. 1 bis 47 im erfindungsgemäßen Verfahren und/oder in der erfindungsgemäßen Vorrichtung.

Ebenfalls Gegenstand der Erfindung ist eine mit dielektrischen Nanopartikeln funktionalisierte Sensoroberfläche für die EIS- und/oder SPR-Messung, die wie oben beschrieben aufgebaut ist, mit auf den Nanopartikeln immobilisierten Aptameren, enthaltend eine Nukleinsäuresequenz, ausgewählt aus den Sequenzen SEQ ID No. 1 bis 47 (als spezifisch an den Analyten bindende Moleküle).

### Ausführungsbeispiel

Nachfolgend wird die Erfindung anhand von Abbildungen und anhand eines Ausführungsbeispiels näher erläutert, ohne auf diese beschränkt zu sein.

Dabei zeigen:

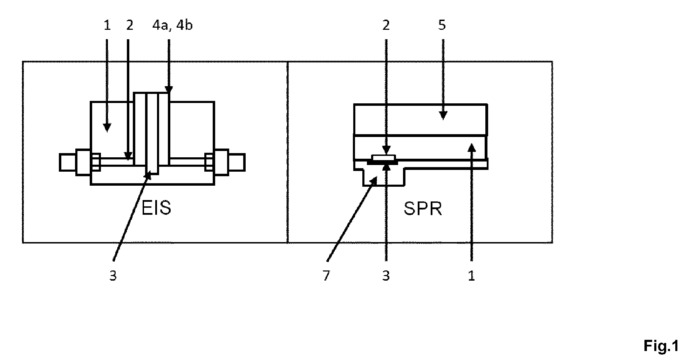

- **Fig. 1:**: einen schematischen Querschnitt durch eine Vorrichtung zur parallelen Durchführung von SPR- und EIS-Messung,

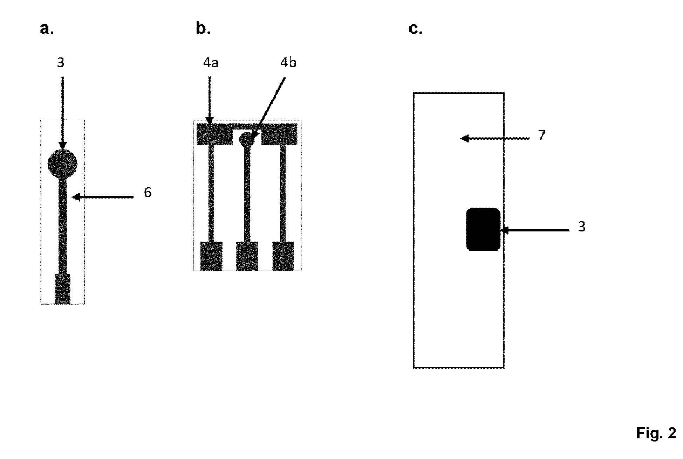

- **Fig. 2:**: eine schematische Draufsicht auf Arbeitselektrode (Fig. 2a) sowie Gegen- und Referenzelektrode (Fig. 2b), sowie die Anordnung der Arbeitselektrode im Substrat (Fig. 2c) und

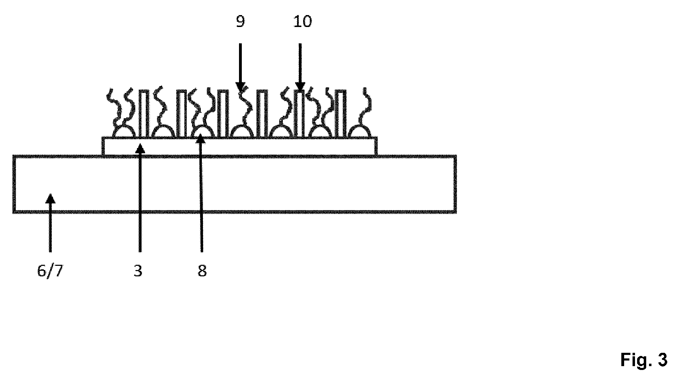

- **Fig. 3:**: eine schematische Schnittdarstellung durch eine funktionalisierte Arbeitselektrode.

Der SPR-Nachweis von Virusproteinen bzw. Viren erfolgt über eine mehrkanalige Durchflusszelle **1** aus Polydimethylsiloxan (PDMS), in der die flüssigen Analyt-Proben über die funktionalisierte 50 nm dicke Goldnanoschicht **3** (9 x 10 mm²) geleitet werden. Diese Schicht befindet sich auf einem 76 x 26 x 4 mm³ großen Sensorchip, der aus einem cyclischen Olefin-Copolymer besteht. Sensorchip und Flusszelle werden im Gerät mit einer metallischen Verbindungsplatte abgedeckt, der wiederum (um 180° versetzt) eine Temperaturkontrollplatte aufgesetzt wird, die zur Aufrechterhaltung einer konstanten Temperatur während der Messung dient.

Wie auch bei der EIS, sind zur Erhöhung der Empfindlichkeit der Messung Nanodiamanten **8** in der Goldschicht **3** enthalten (lokale Feldüberhöhung), die durch Modifizierungen in der Lage sind, analytspezische Aptamere **9** zu binden. Potentielle Bindungsstellen auf den Goldflächen werden blockiert **10.**

Die impedimetrische Virenbestimmung erfolgt in einer Durchflusszelle **1** aus Polydimethylsiloxan (PDMS), in der sich im Durchflusskanal **2** mit einer Querschnittsfläche von 1 x 4 mm² die funktionalisierte glaschipbasierte Arbeitselektrode **3** mit den Maßen 6 x 25 mm² und der 15 x 21 mm² große Glaschip **6** mit elektrochemischer Gegen- (bevorzugt aus Pt) **4a** sowie Referenzelektrode (Ag/AgCl) **4b** gegenüberstehen. Die Abmessungen der sensorischen Strukturen betragen:
- kreisförmige Arbeitselektrode ø3 mm
- kreisförmige Referenzelektrode ø2 mm
- rechteckige Gegenelektrode 3 x 14 mm²

Die sensitive Goldschicht **3** der Arbeitselektrode enthält zur Erhöhung der Empfindlichkeit Nanodiamanten **8,** auf denen wiederum analytspezifische Aptamere **9** immobilisiert sind, so dass nur der in der Lösung vorliegende spezifische Analyt (Virus bzw. Viruskapsidprotein) gebunden wird. Da trotz der Aptamerimmobilisierung auf der Arbeitselektrode einige Stellen der sensitiven Schicht frei bleiben, werden diese mit dem Blockierungsmitteln BSA bzw. Tween 20 **10** besetzt. Somit wird ausgeschlossen, dass der Analyt anstatt am Aptamer direkt an der sensitiven Schicht bindet.

### Bezugszeichenliste

- 1: Durchflusszelle, bevorzugt aus Polydimethylsiloxan
- 2: Durchflusskanal
- 3: Arbeitselektrode (bevorzugt aus Gold)
- 4a: Gegen- (bevorzugt aus Pt) und
- 4b: Referenzelektrode (bevorzugt aus Ag/AgCl)
- 5: Abdeckplatte aus Metall
- 6: Substrat, z. B. Glasträger (für EIS)
- 7: Substrat/Träger aus Polymermaterial (für SPR)
- 8: dielektrischer Nanopartikel, insbesondere Nanodiamant
- 9: spezifisch an Liganden bindendes Molekül/Aptamer
- 10: Blockierungsmittel "BSA" oder "Tween 20"

## Patentansprüche

1. Vorrichtung zum Nachweis eines Analyten in einer Probe mittels Oberflächen Plasmonen Resonanz (SPR) und Elektrochemischer Impedanz Spektroskopie (EIS) enthaltend
a. mindestens eine mit dielektrischen Nanopartikeln funktionalisierte und als Elektrode ausgebildete Sensoroberfläche für die EIS,
b. mindestens eine, gegenüberliegend und annähernd planparallel zur Sensoroberfläche angeordnete Gegen- sowie Referenzelektrode,
c1. wobei die Sensoroberfläche auf einem zumindest teilweise transparenten Substrat aufgebracht ist und auch als Sensoroberfläche für die SPR dient
oder
c2. eine zusätzliche Sensoroberfläche für die SPR
mit auf den Nanopartikeln immobilisierten, spezifisch an den Analyten bindenden Molekülen.

2. Vorrichtung nach Anspruch 1, **dadurch gekennzeichnet, dass** die dielektrische Nanopartikel Nanodiamanten mit einem Durchmesser zwischen 1 nm und 100 nm sind.

3. Vorrichtung nach einem der Ansprüche 1 oder 2, **dadurch gekennzeichnet, dass** die spezifisch an den Analyten bindende Moleküle ausgewählt sind aus Antikörpern, Peptid-Aptameren und/oder DNA-Aptameren.

4. Vorrichtung nach einem der Ansprüche 1 bis 3, **dadurch gekennzeichnet, dass** die spezifisch an den Analyten bindende Moleküle spezifisch an Noroviren binden.

5. Vorrichtung nach Anspruch 4, **dadurch gekennzeichnet, dass** die spezifisch an die Noroviren bindenden Moleküle DNA-Aptamere sind, die eine Nukleinsäuresequenz ausgewählt aus den Sequenzen SEQ ID No. 1 bis 47 enthalten.

6. Vorrichtung nach einem der vorangehenden Ansprüche, **wobei** mindestens eine Sensoroberfläche und Gegen- sowie Referenzelektrode in mindestens einer Messzelle angeordnet sind, welche mikrofluidische Zu- und Abflüsse zum Ein- und Ausleiten einer zu untersuchenden Probenflüssigkeit zwischen Sensoroberfläche und Gegenelektrode aufweist und in einem mikrofluidische Elemente aufweisenden Analysearray angeordnet ist.

7. Vorrichtung nach einem der vorangehenden Ansprüche, **wobei** sich das Substrat zwischen der Sensoroberfläche und einem zur Durchführung der SPR-Messung verwendeten SPR-Einheit befindet.

8. Vorrichtung nach einem der vorangehenden Ansprüche, **dadurch gekennzeichnet, dass** die mindestens eine Sensoroberfläche in Messbereiche unterteilt ist, die unabhängig voneinander auslesbar und auf denen Molekülen gleicher oder verschiedener Bindungsspezifität immobilisiert sind.

9. Verfahren zum Nachweis eines Analyten in einer Probe unter Verwendung einer Vorrichtung nach den Ansprüchen 1-8, **dadurch gekennzeichnet, dass** die Bindung des Analyten an in eine Sensoroberfläche eingebettete dielektrische Nanopartikel mittels spezifisch an den Analyten bindenden Molekülen erfolgt und durch Messung der Oberflächen Plasmonen Resonanz (SPR) sowie der Elektrochemischen Impedanz (EIS) nachgewiesen wird, wobei Daten zur Interaktion des Analyten mit der Sensoroberfläche mittels SPR- und EIS- und Daten zur Konzentration des Analyten in der Messzelle mittels EIS - Messung erfasst werden.

10. Verfahren nach Anspruch 9, **dadurch gekennzeichnet, dass** in ein oder mehreren Messzellen eines Analysearrays ein oder mehrere Sensoroberflächen angeordnet sind und über mikrofluidische Zu- und Abflüsse mit einer zu untersuchenden Probenflüssigkeit kontaktiert werden.

11. Verfahren nach einem der Ansprüche 9 und 10, **dadurch gekennzeichnet, dass** als spezifisch an den Analyten bindende Moleküle Peptid-Aptamere und/oder DNA - Aptamere und/oder Antikörper verwendet werden.

12. Verfahren nach Anspruch 11 zum Nachweis von Noroviren, **dadurch gekennzeichnet, dass** als spezifisch an den Analyten bindende Moleküle Aptameren enthaltend eine Nukleinsäuresequenz ausgewählt aus den Sequenzen SEQ ID No. 1 bis 47 verwendet werden.

13. Verwendung von Aptameren wie in Anspruch 5 definiert zum Nachweis von Noroviren, in einem Verfahren bzw. mit einer Vorrichtung nach einem der vorangehenden Ansprüche.

## Claims

1. A device for detecting an analyte in a sample by means of surface-plasmon resonance (SPR) and electrochemical impedance spectroscopy (EIS) comprising
a. at least one sensor surface for the EIS, said sensor surface being functionalised with dielectric nanoparticles and constituted as an electrode,
b. at least one counter- and reference-electrode arranged lying opposite and approximately plane-parallel to the sensor surface,
c1. wherein the sensor surface is applied on an at least partially transparent substrate and also serves as a sensor surface for the SPR
or
c2. an additional sensor surface for the SPR
with molecules immobilised on the nanoparticles and specifically binding to the analyte.

2. The device according to claim 1, **characterised in that** the dielectric nanoparticles are nanodiamonds with a diameter between 1 nm and 100 nm.

3. The device according to any one of claims 1 or 2, **characterised in that** the molecules binding specifically to the analyte are selected from antibodies, peptide aptamers and/or DNA aptamers.

4. The device according to any one of claims 1 to 3, **characterised in that** the molecules binding specifically to the analyte bind specifically to noroviruses.

5. The device according to claim 4, **characterised in that** the molecules binding specifically to the noroviruses are DNA aptamers, which contain a nucleic acid sequence selected from the sequences SEQ ID no. 1 to 47.

6. The device according to any one of the preceding claims, wherein at least one sensor surface and counter- and reference-electrode are arranged in at least one measuring cell, which comprises microfluidic inflows and outflows for the introduction and removal of a sample fluid to be investigated between the sensor surface and the counter-electrode and is arranged in an analysis array comprising microfluidic elements.

7. The device according to any one of the preceding claims, wherein the substrate is located between the sensor surface and an SPR unit used for performing the SPR measurement.

8. The device according to any one of the preceding claims, **characterised in that** the at least one sensor surface is split up into measurement areas, which can be read independently of one another and on which molecules of the same or different binding specificity are immobilised.

9. A method for detecting an analyte in a sample using a device according to claims 1-8, **characterised in that** the binding of the analyte to dielectric nanoparticles embedded in a sensor surface takes place by means of molecules binding specifically to the analyte and is detected by measuring the surface plasmon resonance (SPR) and the electrochemical impedance (EIS), wherein data for the interaction of the analyte with the sensor surface are detected by means of SPR and EIS measurement and data for the concentration of the analyte in the measuring cell are detected by means of EIS measurement.

10. The method according to claim 9, **characterised in that** one or more sensor surfaces are arranged in one or more measuring cells of an analysis array and are contacted by means of microfluidic inflows and outflows with a sample fluid to be investigated.

11. The method according to any one of claims 9 and 10, **characterised in that** peptide aptamers and/or DNA aptamers and/or antibodies are used as molecules specifically binding to the analyte.

12. The method according to claim 11 for detecting noroviruses, **characterised in that** aptamers containing a nucleic acid sequence selected from the sequences SEQ ID no. 1 to 47 are used as molecules specifically binding to the analyte.

13. Use of aptamers as defined in claim 5 for detecting noroviruses, in a method and with a device according to any one of the preceding claims.

## Revendications

1. Dispositif destiné à déceler un analyte dans un échantillon par résonance plasmonique de surface (SPR) et par spectroscopie d'impédance électrochimique (SIE) contenant
a. au moins une surface de capteur fonctionnalisée avec des nanoparticules diélectriques et conçue sous la forme d'électrode pour la SIE,
b. au moins une contre-électrode, ainsi qu'électrode de référence opposée et placée de manière approximativement plane et parallèle par rapport à la surface de capteur,
c1. la surface de capteur étant appliquée sur un substrat au moins partiellement transparent et faisant également office de surface de capteur pour la SPR
ou
c2. une surface de capteur supplémentaire pour la SPR,
avec des molécules immobilisées sur les nanoparticules, se liant spécifiquement aux analytes.

2. Dispositif selon la revendication 1, **caractérisé en ce que** les nanoparticules diélectriques sont des nanodiamants avec un diamètre compris entre 1 nm et 100 nm.

3. Dispositif selon l'une quelconque des revendications 1 ou 2, **caractérisé en ce que** les molécules se liant spécifiquement aux analytes sont choisies parmi des anticorps, des aptamères de peptides et/ou des aptamères d'ADN.

4. Dispositif selon l'une quelconque des revendications 1 à 3, **caractérisé en ce que** les molécules se liant spécifiquement aux analytes se lient spécifiquement à des norovirus.

5. Dispositif selon la revendication 4, **caractérisé en ce que** les molécules se liant spécifiquement aux norovirus sont des aptamères d'ADM, qui contiennent une séquence d'acide nucléique choisie parmi les séquences SEQ ID n° 1 à 47.

6. Dispositif selon l'une quelconque des revendications précédentes, au moins une surface de capteur et des contre-électrodes ainsi que des électrodes de référence étant placées dans au moins une cellule de mesure, laquelle comporte des entrées et des sorties pour introduire et évacuer un liquide échantillon qui doit être analysé entre la surface de capteur et la contre-électrode et qui est placée dans un système d'analyse comportant des éléments microfluides.

7. Dispositif selon l'une quelconque des revendications précédentes, le substrat se trouvant entre la surface de capteur et une unité SPR utilisée pour réaliser la mesure SPR.

8. Dispositif selon l'une quelconque des revendications précédentes, **caractérisé en ce que** l'au moins une surface de capteur est divisée en zones de mesure qui sont lisibles indépendamment l'une de l'autre et sur lesquelles sont immobilisées des molécules à spécificité de liaison identique ou différente.

9. Procédé destiné à déceler un analyte dans un échantillon en utilisant un dispositif selon les revendications 1 à 8, **caractérisé en ce que** la liaison des analytes à une nanoparticule diélectrique incorporée dans une surface de capteur s'effectue à l'aide de molécules se liant spécifiquement aux analytes et est décelée par mesure de la résonance plasmonique de surface (SPR), ainsi que de l'impédance électrochimique (SIE), des données pour l'interaction des analytes avec la surface de capteur étant détectées à l'aide de données SPR et SIE et de données concernant la concentration des analytes dans la cellule de mesure par mesure SIE.

10. Procédé selon la revendication 9, **caractérisé en ce que** dans une ou dans plusieurs cellules de mesure d'un système d'analyse sont placées une ou plusieurs surfaces de capteur et elles sont mises en contact par l'intermédiaire d'entrées et de sorties microfluidiques avec un liquide échantillon qui doit être analysé.

11. Procédé selon l'une quelconque des revendications 9 et 10, **caractérisé en ce qu'**en tant que molécules qui se lient spécifiquement aux analytes, on utilise des aptamères de peptides et ou des aptamères d'ADN et/ou des anticorps.

12. Procédé selon la revendication 11, destiné à déceler des norovirus, **caractérisé en ce qu'**en tant que molécules qui se lient spécifiquement aux analytes, on utilise des aptamères contenant une séquence nucléique choisie parmi les séquences SEQ ID n° 1 à 47.

13. Utilisation d'aptamères tels que définis dans la revendication 5 pour déceler des norovirus dans un procédé ou avec un dispositif selon l'une quelconque des revendications précédentes.


### SEQUENCE LISTING / SEQUENZPROTOKOLL

<110> Fraunhofer-Gesellschaft zur Förderung der angewandten Forschung e.V., Kurz-Schwabe-Institut für Mess- und Sensortechnik e.V. Meinsberg, Technische Universität Dresden
<120> Verfahren und Vorrichtung zum Nachweis eines Analyten in einer Probe mittels Oberflächen-Plasmonen-Resonanz (SPR) und Elektrochemischer Impedanz Spektroskopie (EIS)
<130> 00017P0180DEEP
<150> DE 10 2011 086 393.1
   <151> 2011-11-15
<160> 47
<170> PatentIn version 3.5
<210> 1
   <211> 49
   <212> DNA
   <213> Artificial Sequence
<220>
   <223> Aptamer
<400> 1
   gtctgtagta gggaggatgg tccggggccc cgagacgacg ttatcaggc 49
<210> 2
   <211> 49
   <212> DNA
   <213> Artificial Sequence
<220>
   <223> Aptamer
<400> 2
   tatcttgggt catcttgcgc gcggctcgtt acttcacagc tggactgat 49
<210> 3
   <211> 49
   <212> DNA
   <213> Artificial Sequence
<220>
   <223> Aptamer
<400> 3
   acgtagtccc agcacggttt gccaaaaagc atggaggtgg tccgggtcc 49
<210> 4
   <211> 47
   <212> DNA
   <213> Artificial Sequence
<220>
   <223> Aptamer
<400> 4
   tcatagctcg agctcaaggg ggtgtggcat ggaggtggtc cgggtcc 47
<210> 5
   <211> 47
   <212> DNA
   <213> Artificial Sequence
<220>
   <223> Aptamer
<400> 5
   agttactctg taagcttact gagcattcta ctgtcgtacg aacttgg 47
<210> 6
   <211> 47
   <212> DNA
   <213> Artificial Sequence
<220>
   <223> Aptamer
<400> 6
   tcatgccatt gccaatcccg taaatttcgt cctgatatcc cgcctca 47
<210> 7
   <211> 49
   <212> DNA
   <213> Artificial Sequence
<220>
   <223> Aptamer
<400> 7
   gtcggaccat acaaatgaac aatgtgttag caaacagttc atgcacaca 49
<210> 8
   <211> 49
   <212> DNA
   <213> Artificial Sequence
<220>
   <223> Aptamer
<400> 8
   gcaatgcggg actagctgta cgatgggtga gggacttgag tagtctgtg 49
<210> 9
   <211> 48
   <212> DNA
   <213> Artificial Sequence
<220>
   <223> Aptamer
<400> 9
   tgcacccgat cgaggaccta tgttacactg aatgaattta accactgt 48
<210> 10
   <211> 49
   <212> DNA
   <213> Artificial Sequence
<220>
   <223> Aptamer
<400> 10
   aaatgtgttc atagacggat agccgtgctg taataaaccg caagttgga 49
<210> 11
   <211> 49
   <212> DNA
   <213> Artificial Sequence
<220>
   <223> Aptamer
<400> 11
   atatttcagt actaagggta tacggtcgga atgccaacgt agaaagccc 49
<210> 12
   <211> 46
   <212> DNA
   <213> Artificial Sequence
<220>
   <223> Aptamer
<400> 12
   tgtaacacat aatcataccg cgtcttaaat ttgggctatt ggcaat 46
<210> 13
   <211> 49
   <212> DNA
   <213> Artificial Sequence
<220>
   <223> Aptamer
<400> 13
   catggaggtg gtccgggtcc catggtcagc cacaaactag tcatcaagg 49
<210> 14
   <211> 49
   <212> DNA
   <213> Artificial Sequence
<220>
   <223> Aptamer
<400> 14
   aggtattgcg gcatcgttat cgcggtcgga ttctagtgca aagtttgag 49
<210> 15
   <211> 49
   <212> DNA
   <213> Artificial Sequence
<220>
   <223> Aptamer
<400> 15
   cccatgttcg tttgtctatc gttatctcca tctccggttc tattatcgt 49
<210> 16
   <211> 49
   <212> DNA
   <213> Artificial Sequence
<220>
   <223> Aptamer
<400> 16
   ccggacaggc ctcgggttaa cctacaacgc tacgtggtct cactcccag 49
<210> 17
   <211> 49
   <212> DNA
   <213> Artificial Sequence
<220>
   <223> Aptamer
<400> 17
   acatcgtcta tacttgtcca acttcgcttt ctcttcagag gccggtgtg 49
<210> 18
   <211> 49
   <212> DNA
   <213> Artificial Sequence
<220>
   <223> Aptamer
<400> 18
   ctcggcaaag ttaagtgtcg ccggaattct ataatagcgt tgaggtcgg 49
<210> 19
   <211> 49
   <212> DNA
   <213> Artificial Sequence
<220>
   <223> Aptamer
<400> 19
   gtctgtagta gggaggatgg tccggggccc cgagacgacg ttatcaggc 49
<210> 20
   <211> 47
   <212> DNA
   <213> Artificial Sequence
<220>
   <223> Aptamer
<400> 20
   tcatagctcg agctcaaggg ggtgtggcat ggaggtggtc cgggtcc 47
<210> 21
   <211> 49
   <212> DNA
   <213> Artificial Sequence
<220>
   <223> Aptamer
<400> 21
   gcgtagtcct agcacggtct gctaaaaagc atggaggtgg tccgggtcc 49
<210> 22
   <211> 48
   <212> DNA
   <213> Artificial Sequence
<220>
   <223> Aptamer
<400> 22
   acctatgtct atcgtagtac gcgtattcta tataggcaaa cgcccgtt 48
<210> 23
   <211> 49
   <212> DNA
   <213> Artificial Sequence
<220>
   <223> Aptamer
<400> 23
   tgtccgacgt gggtgtttac atgttaatat gattttcttc ggcccttcg 49
<210> 24
   <211> 48
   <212> DNA
   <213> Artificial Sequence
<220>
   <223> Aptamer
<400> 24
   tacttggtca atttagcgac gactctgtca tgtgattcgg gttcttgc 48
<210> 25
   <211> 49
   <212> DNA
   <213> Artificial Sequence
<220>
   <223> Aptamer
<400> 25
   tgtaccaacc gatttagata attgttctta taatgtccta tcagtccag 49
<210> 26
   <211> 49
   <212> DNA
   <213> Artificial Sequence
<220>
   <223> Aptamer
<400> 26
   cgccctcgtc ctgaccgtga gcgacctact ctgtgttcct gcttttgat 49
<210> 27
   <211> 49
   <212> DNA
   <213> Artificial Sequence
<220>
   <223> Aptamer
<400> 27
   gagttggtag tgagccacta gccgactttg tgttgttgcg actcctgac 49
<210> 28
   <211> 35
   <212> DNA
   <213> Artificial Sequence
<220>
   <223> Aptamer
<400> 28
   gtatgactat gaccgtagga atccaatttt attgc 35
<210> 29
   <211> 49
   <212> DNA
   <213> Artificial Sequence
<220>
   <223> Aptamer
<400> 29
   atcgggtacg caacccgcat ctataaagtc agcgcggatt tgataacgg 49
<210> 30
   <211> 49
   <212> DNA
   <213> Artificial Sequence
<220>
   <223> Aptamer
<400> 30
   caatagtaac gtggacgggt acaacattac tagacttgca ctggatgtt 49
<210> 31
   <211> 40
   <212> DNA
   <213> Artificial Sequence
<220>
   <223> Aptamer
<400> 31
   tccagggatc aaagctagag ttacttaggg ccggtctgtc 40
<210> 32
   <211> 49
   <212> DNA
   <213> Artificial Sequence
<220>
   <223> Aptamer
<400> 32
   tggaggtgaa atgcactaga gaaacacgct acgtccactg tctatatag 49
<210> 33
   <211> 49
   <212> DNA
   <213> Artificial Sequence
<220>
   <223> Aptamer
<400> 33
   ccggtgggat gagcgtccgg tcagcggtag ctgatctagt gtaggtgcc 49
<210> 34
   <211> 49
   <212> DNA
   <213> Artificial Sequence
<220>
   <223> Aptamer
<400> 34
   tgtcttaagg acagagtctg gttacgctga tattgtaatc atgccccta 49
<210> 35
   <211> 48
   <212> DNA
   <213> Artificial Sequence
<220>
   <223> Aptamer
<400> 35
   agtcccgttg ctagtggctt cattatgttg attgttttgg ggtccgac 48
<210> 36
   <211> 48
   <212> DNA
   <213> Artificial Sequence
<220>
   <223> Aptamer
<400> 36
   tagtgcgata gttcatgaac aggattacgt tctgccgttg ctgtttgc 48
<210> 37
   <211> 49
   <212> DNA
   <213> Artificial Sequence
<220>
   <223> Aptamer
<400> 37
   taagttgccg tactggtgaa tatgactgtc aacatgaact aacggctta 49
<210> 38
   <211> 49
   <212> DNA
   <213> Artificial Sequence
<220>
   <223> Aptamer
<400> 38
   gcataagtta taggtgctat gccataagtt agtctcgtac tttcatgac 49
<210> 39
   <211> 49
   <212> DNA
   <213> Artificial Sequence
<220>
   <223> Aptamer
<400> 39
   gtctaccgat aggtccgtag ggcaagagaa gcatacgtga ccactagta 49
<210> 40
   <211> 49
   <212> DNA
   <213> Artificial Sequence
<220>
   <223> Aptamer
<400> 40
   ttgaggctta attactgata attacattgg agccgtcagt cttgacaat 49
<210> 41
   <211> 49
   <212> DNA
   <213> Artificial Sequence
<220>
   <223> Aptamer
<400> 41
   cctcggttcg agtcggtcgg ctggctaggc ccgtatttgt gtgcgtgtc 49
<210> 42
   <211> 49
   <212> DNA
   <213> Artificial Sequence
<220>
   <223> Aptamer
<400> 42
   aatggacatg gggtcttctt cagcacacgg caaattgcgt ggtacggcc 49
<210> 43
   <211> 49
   <212> DNA
   <213> Artificial Sequence
<220>
   <223> Aptamer
<400> 43
   attacacatg tggtgtttgc actttttgga gaagttaagg tttcgtttg 49
<210> 44
   <211> 49
   <212> DNA
   <213> Artificial Sequence
<220>
   <223> Aptamer
<400> 44
   ctgcatattg ctattaaccc gttctcccgt gtgatcatac ctgtagtcc 49
<210> 45
   <211> 49
   <212> DNA
   <213> Artificial Sequence
<220>
   <223> Aptamer
<400> 45
   catggaggtg gtccgggtcc catggtcagc cacaaactag tcaccaagg 49
<210> 46
   <211> 49
   <212> DNA
   <213> Artificial Sequence
<220>
   <223> Aptamer
<400> 46
   cgattcctag ggttgataat gttggtttgt cagtaagttt cgacgatgc 49
<210> 47
   <211> 49
   <212> DNA
   <213> Artificial Sequence
<220>
   <223> Aptamer
<400> 47
   agctatcaag tcgaggcgca cgacatgggt gtattttctg ctcatacgg 49